Europäisches Patentamt

European Patent Office

Office européen des brevets

(11) Publication number: **0 423 927 A2**

# EUROPEAN PATENT APPLICATION

(21) Application number: 90309396.1

(51) Int. Cl.5: **H02H 7/00**

(22) Date of filing: 28.08.90

The title of the invention has been amended (Guidelines for Examination in the EPO, A-III, 7.3).

(30) Priority: 31.08.89 US 401594

(43) Date of publication of application:
24.04.91 Bulletin 91/17

(84) Designated Contracting States:
CH DE FR GB IT LI

(71) Applicant: **WESTINGHOUSE ELECTRIC CORPORATION**
**Westinghouse Building Gateway Center**
**Pittsburgh Pennsylvania 15222(US)**

(72) Inventor: **Mallick, George Theodore, Jr.**
**2050 Old Ramsey Road**
**Monroeville, PA 15146(US)**

(74) Representative: **van Berlyn, Ronald Gilbert**
**23, Centre Heights**
**London, NW3 6JG(GB)**

(54) **Monitoring system for detecting quench.**

(57) The present invention provides a straightforward sensor and method for using the same to verify the existence of and detect a pacman quench, if it exists, in a superconducting coil (1), magnet or inductor. An active sensor (4) utilizing a transmitter coil (5), a receiving coil (6) and a detector circuit (9) is used to measure the change in magnetic susceptibility caused by the presence of a large or slow moving pacman quench. A passive sensor (10) utilizing a search coil (11) and a detector circuit (12) is able to measure the change in magnetic flux associated with a change in the current distribution in the superconducting coil (1) when a small or fast moving pacman quench passes by the sensor (10).

Figure 3

EP 0 423 927 A2

## PACMAN QUENCH DETECTOR

The present invention relates to a sensor and method for using the same to detect the occurrence of a normal zone or quench in a superconductor and more particularly to a "pacman" quench detection sensor.

Superconducting coils in the form of magnets or inductors are capable of generating high magnetic fields and thereby storing large amounts of energy. Superconducting coils are very efficient for these purposes because no energy is lost to resistive or joule heating in the superconducting current path. If, however, a region of a superconducting material loses its superconducting property (i.e. becomes normal or quenches), joule heating occurs in the normal or resistive, nonsuperconducting region. If the region is small enough or the cooling sufficient enough, the heat will be dissipated and the region will return to its superconducting state. If the region is large, such that sufficient joule heating occurs and overcomes the system's ability to dissipate the heat, the normal zone will propagate, causing a catastrophic condition which can result in severe damage to the inductor or magnet as even more energy is dissipated in portions of the inductor or magnet.

It has been speculated that a superconducting coil may experience a dynamic quench mode wherein the normal zones do not grow in size, but rather remain approximately the same size and move about the coil. A quench in this mode has been picturesquely called a "pacman" quench, named after the popular video game, presumably because the normal area "gobbles up" superconducting material as it migrates through the coil. Pacman quenches, if they exist, are important, because they result in a substantial amount of energy being dissipated in the otherwise superconducting coil. It is important to verify or discount their existence because, if they are found to exist, it may be possible to minimize their effect by changing the design or structure of the superconducting coil. On the other hand, if it can be demonstrated experimentally that pacman quenches do not exist, it will allow attention to be focussed on other design considerations and constraints.

It would be desirable, therefore, to develop a pacman quench detection sensor and method for using the same to determine whether pacman quenches do indeed exist, and if so, to detect them.

Generally, the present invention relates to a pacman quench detector and method for using the same to detect and verify the existence of a pacman quench in a superconductor, preferably a superconducting coil, inductor or magnet. In one embodiment the pacman quench detection sensor is active in that it sends out a signal, preferably a magnetic field signal, and monitors the response which will vary depending on the presence or absence of a pacman quench. In a second embodiment the pacman quench detector is passive and monitors the change in the magnetic field of the superconducting coil due to the presence or absence of a pacman quench. Both types of sensors can be used at the same time to detect pacman quenches.

Preferably, the active detector or sensor is an active magnetic susceptibility bridge comprising a detector array consisting of two detector coils, which is placed in close proximity to a superconducting coil wherein a pacman quench may occur. One detector coil is a transmitter and the other is a receiver. The detector coils are oriented in such a way as to minimize the magnetic coupling between them when the superconducting coil is in its superconductive state. When the supercon ducting coil is in its superconductive state it excludes from its interior the magnetic flux signal generated by the transmitter coil. As a result, the magnetic signal received by the receiver coil is minimized. When the superconducting coil becomes normal due to the existence of a passing pacman quench, the magnetic flux from the transmitter coil may penetrate it thereby coupling with the receiver coil causing a measurable increase in the signal received by the receiver coil. The change in the magnetic susceptibility of the superconducting coil due to the presence of a pacman quench allows a measurable magnetic coupling to occur between the two detecting coils. A detector circuit measures this difference.

The second embodiment of the present invention is a passive detector coil for monitoring magnetic flux changes due to the presence of a pacman quench. The current in the superconducting coil cannot change rapidly because of the enormous inductance of the coil which is typically on the order of 100 H. When a pacman quench occurs in the coil, it causes a redistribution of current out of the superconducting material and into the normal stabilizer material which usually surrounds and supports the superconducting wires which form the coil. A local redistribution of the magnetic field within the superconducting coil also occurs while a quench is in progress due to current redistribution therein. The local change in the magnetic field can readily be detected by a search coil mounted in close proximity to the superconducting coil. As the magnetic field around the superconducting coil changes due to the occurrence of a pacman quench, the search coil will respond to this change in magnetic field. A detector circuit measures the change detected by the search coil.

Other details, objects and advantages of the present invention will become more readily apparent from the following description of a presently preferred embodiment thereof.

In the accompanying drawing, a preferred embodiment of the present invention is illustrated, by way of example only, wherein:

Figure 1 shows an end view of a typical conductor array of a superconducting coil;

Figure 2 shows a diagram of two embodiments of a pacman sensor near a superconducting coil;

Figure 3 shows a diagram of the two embodiments of a pacman sensor shown in Figure 2 when a pacman quench is occurring in the superconducting coil;

Figure 4 shows the output of one detector circuit of an active pacman sensor as a pacman quench passes by the sensor; and

Figure 5 shows the output of one detector circuit of a passive pacman sensor as a pacman quench passes by the sensor.

The present invention provides a straightforward sensor and method for using the same to detect a pacman quench, if it exists, in a superconductor such as a superconducting coil, inductor, or magnet. The active detector uses an alternating magnetic field to probe the superconductor, looking for changes in its magnetic susceptibility which accompany a change from the superconducting state to the normal state and back again due to the passage of a pacman quench. The passive detector monitors any change in the magnetic field associated with the transient displacement of the current in the superconducting wires, typically to the stabilizer material, due to the passage of a pacman quench.

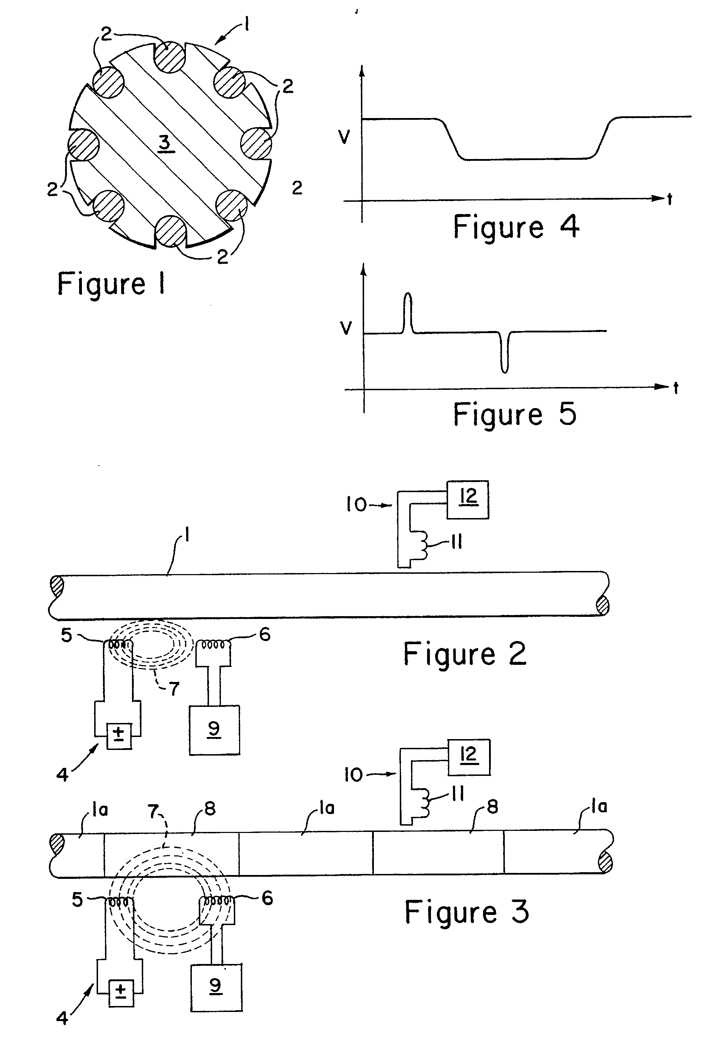

Figure 1 shows an end view of a typical conductor array of a superconducting coil 1 such as is used in a magnet or inductor. The superconducting material such as Nb-Ti in the form of wires 2 are embedded in a supporting material 3. Typically the supporting material is shaped like a rod and has grooves cut in it to receive the superconducting wires 2. Preferably, the supporting material is aluminum due to its good thermal conductivity, however other materials with good strength and thermal conductivity can also be used. When the superconducting wires 2 become normal, the current typically is redistributed into the supporting material 3.

Now consider a simplified segment of a superconductor 1 of the construction shown in Figure 1. An active detector 4 consisting of two coils of wire is placed in close proximity to the superconductor 1 as shown in Figure 2. One coil 5 is a transmitter and the other coil 6 is a receiver. The coils 5 and 6 are oriented in such a way as to minimize the magnetic coupling between them when the superconductor 1 is in a superconducting state. The superconducting wires 2 when in the superconducting state exclude the magnetic flux 7 generated by the transmitter coil 5 from the superconductor 1. When part of the superconducting wires 2 become normal due to a pacman quench 8 as shown in Figure 3 (1a represents the portion of the superconductor which is still superconducting), the magnetic flux 7 from the transmitter coil 7 may penetrate the superconductor due to a change in its magnetic susceptibility. The change in the magnetic susceptibility results in an increase in the magnetic-coupling between the two detector coils 5 and 6. This change in magnetic susceptibility can be detected by a detection circuit 9, such as an RLC tuned circuit. Any number of different detection circuits 9 can be used which produces a measurable voltage response due to the increased magnetic coupling between coils 5 and 6. Even an oscilloscope could be used to detect the changes in voltage in detection circuit 9 due to the change in the magnetic coupling. The output of one such detection circuit 9 is shown in Figure 4 and shows the change which would accompany a pacman quench passing by active detector 4.

There are, however, limitations to the sensitivity of the active sensor 4 due to the copper cladding typically used on the superconducting wires 2 which tends to shield the wires (whether in the normal or superconducting state) from the detector magnetic field 7, due to "skin depth". Reasonable assumptions for the materials indicate that magnetic fields from transmitter coil 5 which oscillate at frequencies greater than approximately 50 Hz will not penetrate the copper cladding, and thus cannot be used. However, a measuring field of ≤ 50 Hz will be effective in detecting a pacman quench 8 as small as a couple meters in length, moving at 30 meters per second. The active sensor 4 is more effective for detecting a pacman quench which has a large length or is slower moving.

The current flowing in a superconducting coil cannot change rapidly because of its enormous inductance, typically on the order of 100 Henries. However, when a pacman quench occurs, it causes a redistribution of the current out of the superconducting material 2 and into the normal stabilizer material 3 as discussed above in connection with Figure 1. This redistribution of current does not change the net current flowing through coil 1, and hence is not limited by the inductance as to how fast this redistribution of the current can occur. Since the magnetic field around the superconducting coil is a function of current distribution within the coil, a local redistribution of the magnetic flux will accompany a pacman quench.

In the case of a migrating pacman quench 8, a section of normal material travelling in the superconductor 1 gives rise to a travelling magnetic flux wave. This wave results in a change in the magnetic field which can readily be detected by a passive sensor 10 comprising a search coil 11 mounted in close proximity to the superconducting coil 1 and a detector circuit 12. This is shown in Figure 2. The search coil can be an air core solenoid or any other device which reacts to the change in the magnetic flux, preferably by producing a change in voltage or current. A detector circuit 12 is used to measure the change in the signal from the search coil 11 which corresponds to the change in the magnetic field of the superconducting coil when a pacman quench occurs as shown in Figure 3. The detector circuit 12 can be any number of electrical circuits including an amplifier and a rectifier or even an oscilloscope. Figure 5 shows the output of one detector circuit 12 if a pacman quench passed by the passive sensor 10.

Preferably, the passive sensor 10 will be used in conjunction with the active sensor 4 since they are complimentary to each other. The passive sensor 10 is more sensitive to small, fast moving pacman quenches, and is relatively insensitive to the larger, slow moving pacman quenches that the active sensor 4 is better able to detect.

While a presently preferred embodiment of practicing the invention has been shown and described with particularity in connection with the accompanying drawings, the invention may otherwise be embodied within the scope of the following claims.

## Claims

1. A pacman quench detection sensor (10) characterized by a search coil (11) capable of being placed in proximity to a superconducting coil (1) having a magnetic field associated therewith, and electrically connected to a detector circuit (12) such that the search coil (11) responds to a change in the magnetic field in a localized region of the superconducting coil (1) caused by a pacman quench and the detector circuit (12) measures the response of the search coil (1).

2. The quench detection sensor (10) as described in claim 1 wherein the search coil (11) is characterized in that it produces a change in voltage or current in response to a change in the magnetic field.

3. The quench detection sensor (10) as described in claim 1 or 2 wherein the search coil (11) comprises a solenoid.

4. The quench detection sensor (10) as described in claim 1 wherein the sensor is passive.

5. The quench detection sensor (10) as described in claim 2 wherein the detector circuit (12) monitors and displays the change in voltage or current of the search coil (11).

6. The quench detection sensor (10) as described in claim 5 wherein the detector circuit (12) comprises a rectified amplifier.

7. A pacman quench detection sensor (4) characterized by a plurality of detector coils (5, 6) capable of being placed in proximity to a superconducting coil (1), one detector coil (5) functioning as a trans mitter to generate a magnetic field signal (7) and a second detector coil (6) connected to a detection circuit (9) and functioning as a receiver of the magnetic field signal (7), both detector coils oriented so as to minimize their magnetic coupling when the superconducting coil (1) is in a superconducting state and to increase their magnetic coupling when a change in magnetic susceptibility of the superconducting coil (1) occurs due to a pacman quench (8).

8. The quench detection sensor (4) as described in claim 7 wherein the detection circuit (9) comprises an RLC tuned circuit.

9. The quench detection sensor (4) as described in claim 7 or 8 wherein the sensor is active.

10. The quench detection sensor (4) as described in any of claims 7-9 characterized in that there are two detector coils (5, 6) whose magnetic axes are in the same line.

11. The quench detection sensor (4) as described in claim 7 wherein the magnetic coupling between the detector coils (5, 6) is maximized when a change in magnetic susceptibility occurs.

12. The quench detection sensor as described in claim 7 wherein the magnetic field signal generated by the transmitter coil is $\leq$ 50 Hz.

Figure 1

Figure 4

Figure 5

Figure 2

Figure 3